# EUROPÄISCHE PATENTSCHRIFT

(11) **EP 3 442 730 B1**
(45) Veröffentlichungstag und Bekanntmachung des Hinweises auf die Patenterteilung: **16.09.2020**
(21) Anmeldenummer: 17724477.9
(22) Anmeldetag: 24.03.2017
(51) Int. Cl.: B22F 3/105, B22F 3/11, B22F 3/16, B28B 3/02, B30B 15/06, C04B 35/645, B22F 3/14

(54) **VERFAHREN ZUR HERSTELLUNG VON METALLISCHEN ODER KERAMISCHEN TRÄGERSUBSTRATEN SOWIE TRÄGERSUBSTRATE**
MANUFACTURING METHOD OF METALLIC OR CERAMIC CARRIER SUBSTRATES AS WELL AS CARRIER SUBSTRATES
PROCÉDÉ DE FABRICATION DE SUBSTRATS PORTEURS MÉTALLIQUES OU CÉRAMIQUES AINSI QUE LES SUBSTRATS PORTEURS PRODUITES PAR LEDIT PROCÉDÉ

(30) Priorität: 13.04.2016 DE 102016004548
(43) Veröffentlichungstag der Anmeldung: 20.02.2019
(73) Patentinhaber: Forschungszentrum Jülich GmbH, 52425 Jülich (DE)
(72) Erfinder: BRAM, Martin, 52428 Jülich (DE); VASSEN, Robert, 52134 Herzogenrath (DE); GONZALEZ, Jesus, 52066 Aachen (DE); MARCANO, Diana, Edmonton, AB (CA)
(86) Internationale Anmeldenummer: PCT/DE2017/000074
(87) Internationale Veröffentlichungsnummer: WO 2017/177995

(56) Entgegenhaltungen:
- EP-A1- 2 036 693
- WO-A2-2009/004444
- US-B1- 6 306 325
- HARONA DIARRA ET AL: "Investigating the effect of tablet thickness and punch curvature on density distribution using finite elements method", INTERNATIONAL JOURNAL OF PHARMACEUTICS, Bd. 493, Nr. 1-2, 1. September 2015 (2015-09-01), Seiten 121-128, XP055384530, AMSTERDAM, NL ISSN: 0378-5173, DOI: 10.1016/j.ijpharm.2015.07.030

## Beschreibung

Die Erfindung betrifft ein neues Verfahren zur Herstellung eines metallischen oder keramischen Trägersubstrats, insbesondere eines metallischen oder keramischen Substrats für eine Protonen leitende Membran oder für eine Sauerstoffionen leitende Brennstoff- bzw. Elektrolysezelle. Die Erfindung betrifft zudem Trägersubstrate, die mit diesem Verfahren hergestellt werden können, und die Bereiche mit unterschiedlichen Porositäten aufweisen.

### Stand der Technik

Zur Herstellung poröser bzw. dichter Substratkörper existieren derzeit unterschiedliche Herstellungsverfahren.

Sinterverfahren basieren im Allgemeinen auf Parametern, die die Verdichtung des zunächst mehr oder weniger porösen Materials beschleunigen. Als Sintern bezeichnet man die Wärmebehandlung vorgepresster Formteile aus feinen Materialien, insbesondere Pulvern, wodurch feste Metall- oder Keramikteile mit genau definierten Maßen und Eigenschaften herstellbar sind.

Ein besonderes Verfahren der Fertigungstechnik, mit welchem Pulver und Feststoffe, besonders Keramiken und Metalle, gleichzeitig heiß gepresst und gesintert werden, ist das Heißisostatische Pressen (HIP). Dabei wird das zu fertigende Bauteil in einen beheizbaren DruccKessel eingesetzt. Bei Temperaturen bis zu 2000 °C und Drücken von 100 bis 350 MPa wird das Bauteil unter Schutzgas bzw. technischer Luft verdichtet. Da der Druck von allen Seiten auf das Werkstück einwirkt, zeigt das hergestellte, sehr dichte Bauteil isotrope Eigenschaften.

Nachteilig bei diesem Verfahren sind die hohen Fertigungskosten und Einschränkungen hinsichtlich der erreichbaren Maßtoleranz. Hauptanwendungsgebiet für das HIP-Verfahren ist das Verdichten gekapselter Pulver sowie das Nachverdichten von bereits gesinterten metallischen und keramischen Werkstücken.

So ist beispielsweise aus JP 2006-045038 A ein Verfahren zur Herstellung eines metallischen oder keramischen Bauteils bekannt, bei dem das Bauteil unter Druck und bei erhöhter Temperatur mittels zweier Formwerkzeuge innerhalb einer Trommelform aus Pulver erzeugt wird. Das Bauteil weist bevorzugt die Form einer bikonvexen Linse mit einem flachen Rand auf.

Es hat sich darüber hinaus als vorteilhaft für eine Verdichtung herausgestellt, wenn während der Ausübung von Druck auf das zu sinternde Material zusätzlich ein elektrisches Feld angelegt wird, so dass es zu einer Erhitzung des Materials über den sogenannten Joule-Effekt (Widerstandsheizung in Folge eines Stromflusses über das Bauteil bzw. die Pressform) kommt.

Ein Verfahren, welches diese Erkenntnis ausnutzt ist das so genannte Feldunterstützte Sintern/Spark-Plasma Sintern (engl. Field Assisted Sintering Technology/Spark Plasma Sintering (FAST/SPS)). Dabei handelt es sich um ein mit dem Heißpressen vergleichbares Sinterverfahren, welches sowohl in Schutzgas, unter Vakuum oder an Luft durchgeführt werden kann.

Die Vorteile des FAST/SPS sind die sehr steilen Heiz- bzw. Kühlrampen mit bis zu 1000 K/min in Kombination mit kurzen Haltezeiten, die insgesamt zu deutlich kürzeren Prozesszeiten bei sehr guter Verdichtung von mehr als 90 % der theoretischen Dichte führen. Weiterhin kann bei Anwendung von Pulvern mit Partikelgrößen im Nanometerbereich häufig diese Nanostrukturierung beibehalten werden, da auf Grund der kurzen Prozesszeiten ein Korngrößenwachstum in der Regel verhindert wird. Zudem erscheint eine durch ein elektrisches Feld induzierte Diffusion möglich [1].

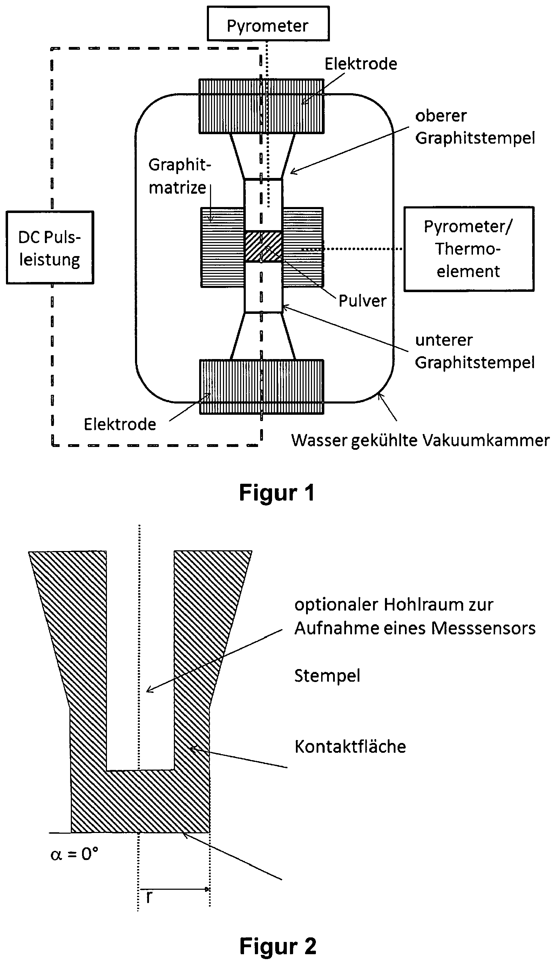

Eine typische Vorrichtung zur Durchführung eines FAST/SPS-Verfahrens ist in Figur 1 dargestellt. Das zu sinternde Material (metallisch oder keramisch) wird üblicherweise als Pulver in eine elektrisch leitfähige Matrize, in der Regel aus Graphit, eingefüllt, die gegenwärtig zumeist die Form eines Hohlzylinders aufweist. Die Vorverdichtung des Materials erfolgt über zwei über Druck beaufschlagte Stempel, in der Regel ebenfalls aus Graphit, die exakt an die hohlzylindrische Geometrie des Tiegels angepasst sind. Es folgt der eigentliche Verdichtungsschritt (Sinterschritt) in einer SPS-Maschine. Dort wird über eine hydraulische Presse ein definierter Druck auf die Stempel ausgeübt. Dieser Schritt kann sowohl unter Schutzgas als auch unter Vakuum erfolgen.

Die über ein solches Verfahren herstellbaren Bauteile weisen in der Regel eine prismatische oder zylinderförmige Form auf, wobei die Grundfläche und die Deckfläche der Bauteile in der Regel parallel zueinander ausgerichtet sind, die Grundflächen und Deckflächen üblicherweise eine deckungsgleiche Geometrie aufweisen und die Seitenfläche, bzw. Seitenflächen senkrecht auf der Grundfläche stehen.

Anders als beim Heißpressen, bei dem die notwendige Sintertemperatur durch äußere Zuführung von Wärme erfolgt, wird beim FAST/SPS die Erwärmung des zu sinternden Materials durch einen gepulsten Strom oder durch einen Gleichstrom, mit Stromstärken von typischerweise einigen Kiloampere und einigen Volt Spannung bewirkt.

Sofern es sich um leitfähiges Pulver handelt, wird der Strompuls direkt durch die Matrize und durch das pulverförmige Material geleitet, wobei sich beides auf Grund des Ohm'schen Widerstandes aufheizt. Voraussetzung für eine direkte Erhitzung des Pulvers ist eine ausreichende elektrische Leitfähigkeit.

Sofern es sich um nichtleitfähiges Pulver handelt, wird der Strompuls direkt durch die Matrize geleitet, so dass sich zunächst diese aufheizt und anschließend das sich in der Matrize befindliche Pulver durch Wärmeleitung ebenfalls aufgeheizt wird.

Das FAST/SPS-Verfahren wird in der Regel für die Verdichtung von metallischen oder keramischen Materialien angewendet, die zunächst als pulverförmiges Ausgangsmaterial vorliegen. Das Verfahren wird darüber hinaus auch für eine schnelle Verdichtung in solchen Fällen angewendet, bei denen während des Sinterns Probleme auftreten, wie beispielsweise bei metallischen Pulvern, die dazu neigen, stabile Oxidschichten auszubilden.

So konnte das FAST/SPS-Verfahren erfolgreich eingesetzt werden, um hochdichte Aluminiumlegierungen zu erzeugen [2].

Gleichzeitig wurde das FAST/SPS-Verfahren erfolgreich bei der Herstellung poröser metallischer Träger aus NiCoCrAlY-Pulvern angewendet, die für einen Einsatz als Membranen geeignet sind [3].

Protonen leitende Membranen werden regelmäßig zur Gastrennung eingesetzt. Gastrennmembranen werden in der Regel eingesetzt, um aus einem Gasstrom erwünschte Komponenten, wie beispielsweise Gasmoleküle, Sauerstoffionen oder Protonen abzutrennen. Substratgestützte Brennstoff- und Elektrolysezellen werden für die energieeffiziente Energieerzeugung bzw. H₂-Produktion eingesetzt. Die für diese Anwendungen verwendeten, metallischen oder keramischen Substrate weisen typischerweise eine Porosität zwischen 15 und 40 Vol.-% auf. Dabei sollte die Porosität so groß wie möglich sein, um den Gastransportwiderstand durch die Membran so gering wie möglich zu halten.

Im Labormaßstab werden solche Membranen mit Durchmessern von ca. 15 mm typischerweise in einem Reaktor eingebaut und an den Rändern über Goldringe abgedichtet. Bei Versuchsbedingungen von 800 bis 1000 °C erweichen die Goldringe vorteilhaft und ermöglichen so eine perfekte Abdichtung zwischen der Membran und dem Reaktorgehäuse. Auf diese Weise erfolgt der Gastransport ausschließlich über die Membran.

Im industriellen Maßstab, bei dem die Membranen deutlich größere Abmessungen aufweisen, ist ebenfalls eine sehr gute Abdichtung zwischen Membran und dem gasdichten Gehäuse notwendig, um einen unkontrollierten Gastransport und -austausch zwischen dem Feedstrom und der Permeatseite zu verhindern. Für diese Zwecke kann die Abdichtung der Metall geträgerten oder der Keramik geträgerten Membran entweder durch Festphasensinterprozesse oder durch Flüssigphasenprozesse erfolgen [4].

Das Diffusionsverbinden ist das bevorzugte Verfahren aus dem Bereich des Festphasensinterns und kann sowohl für die Abdichtung von metallischen als auch keramischen Komponenten angewendet werden. Allerdings können die lange Prozessdauer mit hohem Druck und hohen Temperaturen dazu führen, dass eine weitere Verdichtung der porösen Membran erfolgt, die nachteilig zu einem erhöhten Gasflusswiderstand führt.

Bei den Flüssigphasenprozessen wird zwischen Lötverfahren und Schweißverfahren unterschieden. Lötverfahren mit Gläsern oder metallbasierten Loten können vorzugsweise bei metallischen und keramischen Trägern angewendet werden, während Schweißverfahren ausschließlich bei metallischen Trägern eingesetzt werden. Im Allgemeinen sind sowohl Lötals auch Schweißverfahren bei ihrer Anwendung bei porösen Materialien problematisch, da die erzeugten Flüssigphasen auf Grund von Kapillarkräften leicht durch die Porenstrukturen transportiert werden können. Dies kann wiederum nachteilig zu einem teilweisen Verschluss der Poren und zu einer geometrisch undefinierten Schweißnaht führen. Beispiele hierfür sind einerseits eine Spaltbildung im Falle einer unvollständig ausgeführten Schweißnaht oder andererseits die Ausbildung einer konkaven Vertiefung in der Schweißnaht, wenn die Schmelzphase in die an die Schweißnaht angrenzende Porenstruktur eindringt. Solche Unregelmäßigkeiten in der Schweißnaht sind nur schwer mit einem Membranmaterial zu beschichten, da das Risiko der Ausbildung von Rissen in diesen Bereichen regelmäßig erhöht ist.

Verschiedene Schweißtechniken, wie das Wolfram-Inertgas-Lichtbogenschweißen, das Schutzgasschweißen, das Elektronenstrahlschweißen oder das Laserschweißen werden bereits für die Herstellung von Membranreaktoren eingesetzt [4].

Beim Lichtbogenschweißen können Poren in der Schweißnaht eingeschlossen werde. Dabei entstehen häufig auch ausgedehnte Wärmeeinflusszonen (engl. heat affected zone (HAZ)). Beim Elektronenstrahlschweißen und beim Laserschweißen werden demgegenüber geringere Wärmemengen eingetragen, so dass auch nur kleinere Wärmeeinflusszonen erzeugt werden. In diesen Wärmeeinflusszonen kommt es häufig nachteilig zu einem Korngrößenwachstums und/oder zu Phasentransformationen. Dies führt an den Grenzen in der Regel zu Verzugsspannungen und Verzerrungen, welche die Stabilität und die Maßhaltigkeit des Bauteils negativ beeinflussen. Zudem wirken sich Wärmeeinflusszonen nachteilig auf die homogene Verteilung der Legierungselemente in dem metallischen Substrat und den angrenzenden, gasdichten Komponenten des Membranreaktorgehäuses aus. Eine Veränderung in der Zusammensetzung der Legierung in und nahe bei einer Schweißnaht kann wiederum signifikant den Korrosionswiderstand des metallischen Substrates und der Zuführung verringern.

Aus US 6 306 325 B1 und EP 2 036693 A1 sind jeweils bereits Verfahren zur Herstellung eines metallischen oder keramischen Bauteils bekannt.

In WO 2009/004444 A2 wird ein Verfahren zur Herstellung einer metallischen oder keramischen Prothese offenbart, wobei das Verfahren einen Sinterschritt umfasst, der durch ein elektrisches Feld unterstützt wird.

H. Diarra et al. beschreiben in "Investigating the effect of tablet thickness and punch curvature on density distribution using finite elements method", International Journal of Pharmaceutics, Bd. 493, Nr. 1 - 2, Seiten 121-128, ein Verfahren zur Herstellung metallischer oder keramischer pharmazeutischer Tabletten.

JP 2006 045038 A offenbart ein Verfahren zur Herstellung metallischer oder keramischer optischer Linsen mit unterschiedlichen Porositäten, bei dem ein definierter Übergang zwischen einem äußeren Bereich mit einer höheren Dichte und einem inneren Bereich mit einer geringeren Dichte durch die Verwendung eines Stempels, dessen Geometrie eine konkave Aussparung aufweist, erzielt wird. Dabei wird entsprechendes Ausgangspulver einem druckunterstützten Verdichtungs- und Sinterschritt unterzogen,

### Aufgabe und Lösung

Die Aufgabe der Erfindung ist es, poröse metallische oder keramische Trägersubstrate als Bauteile mit einer bevorzugt auf einer Seite planaren Oberfläche ohne Spalte oder Vertiefungen zur fehlerfreien Aufbringung einer Membranschicht bereit zu stellen, wie sie für Protonen leitende Gastrennmembranen oder Sauerstoffionen leitende Brennstoff- bzw. Elektrolysezellen erforderlich sind, ohne jedoch die nachteiligen Wärmeeinflusszonen und die geometrisch undefinierten Schweißnähte aufzuweisen, wie sie bei der bisher notwendigen nachträglichen Behandlung und Verdichtung von Bauteilen bei der Anbindung an ein Gehäuse auftreten. Ferner ist es die Aufgabe der Erfindung ein Verfahren bereitzustellen, bei dem metallische oder keramische Trägersubstrate derart erzeugt werden können, dass bereits während der Herstellung Bereiche mit unterschiedlicher Porosität generiert werden, die an der Grenzfläche dicht/porös so ausgestaltet sind, dass eine fehlerfreie Membranbeschichtung möglich wird.

Das Verfahren sollte zudem vorteilhaft die Ausbildung von Wärmeeinflusszonen verhindern oder zumindest verringern, um die bisherigen Nachteile durch Verspannungen, Verzerrungen oder Korrosionsanfälligkeit zu reduzieren.

Ferner sollte das Verfahren auch zur Herstellung metallischer oder keramischer Trägersubstrate für den Einsatz in Membranreaktoren in einer Größenordnung bis in den industriellen Maßstab skalierbar sein.

Die Aufgaben der Erfindung werden gelöst durch ein Verfahren zur Herstellung von metallischen und/oder keramischen Trägersubstraten mit den Merkmalen des Hauptanspruchs sowie durch metallischen und/oder keramischen Trägersubstrate. Vorteilhafte Ausgestaltungen des Verfahrens finden sich in den darauf rückbezogenen Ansprüchen wieder.

### Gegenstand der Erfindung

Im Rahmen der Erfindung wurde herausgefunden, dass die Nachteile des bisherigen Standes der Technik zur Herstellung eines metallischen und/oder keramischen Substrates insbesondere für eine spätere Membranbeschichtung durch eine Kombination eines Sinterverfahrens mit überlagertem Druck mit wenigstens einem geometrisch angepassten Stempel überwunden werden können. Bei dem erfindungsgemäßen Verfahren kann dazu auch noch optional ein überlagertes elektrisches Feld eingesetzt werden.

Als für das erfindungsgemäße Verfahren geeignete druckunterstützte Verfahren kommen insbesondere das Heißpressen oder besonders vorteilhaft das Feldunterstützte Sintern/Spark-Plasma-Sintern (FAST/SPS) in Frage.

Im Rahmen der Erfindung hat sich herausgestellt, dass der Einsatz eines Stempels mit einer geometrisch modifizierten Kontaktfläche, insbesondere mit einer negativen Hohlform, während des Verdichtens bzw. Sinterns dazu führt, dass das zu sinternde Material (Substrat) unterschiedlich stark gepresst bzw. verdichtet wird, und sich dadurch gleichzeitig im erzeugten Bauteil Bereiche mit unterschiedlichen Porositäten ausbilden.

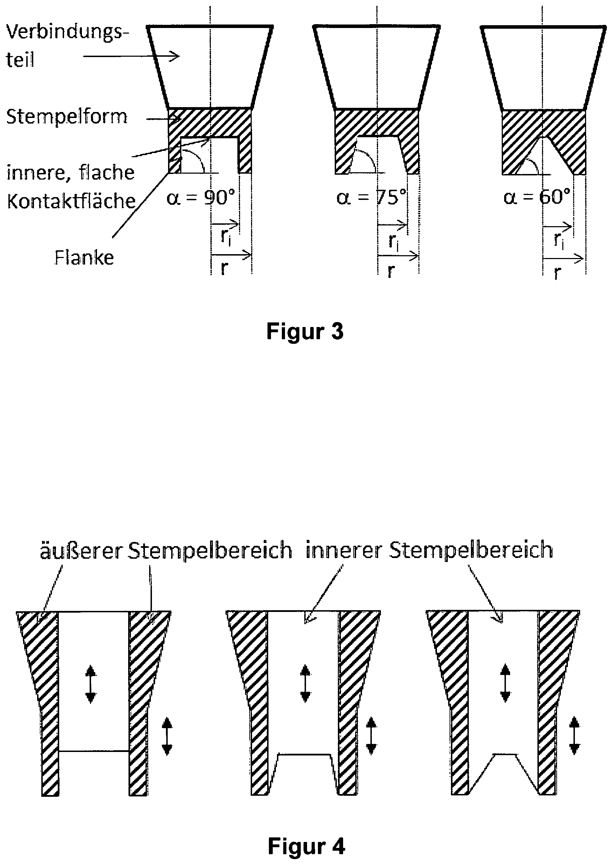

Bei dem erfindungsgemäßen Stempel handelt es sich um einen solchen mit einer speziell angepassten Geometrie, dergestalt, dass die Oberfläche des Stempels, die für den Kontakt mit dem zu verdichtenden Pulver vorgesehen ist, und im Folgenden Kontaktfläche genannt, neben einem äußeren flachen Bereich, einen inneren Bereich aufweist, der gegenüber der Ebene, die durch den äußeren Bereich gebildet wird, eine konkave Aussparung aufweist. (siehe dazu auch Figur 3).

Durch den Einsatz eines Stempels mit einer derart geometrisch modifizierten Kontaktfläche ist es möglich, dass bei dem erfindungsgemäßen Verfahrens schon während des Pressens und Sinterns auf das zu verdichtenden Substrat unterschiedliche Drücke einwirken, die in Folge verschiedene Bereiche mit unterschiedlichen Porositäten ausbilden.

Die Grenzlinie zwischen dem äußeren flachen Bereich des Stempels und dem inneren Bereich, der eine konkave Aussparung aufweist, definiert bei dem zu erzeigenden Bauteil die Grenzfläche zwischen einem Bereich mit einer geringeren Porosität und einem Bereich mit einer höheren Porosität, für welche nachfolgernd der Begriff Grenzfläche porös/dicht verwendet wird.

Die konkave Aussparung im Inneren der Kontaktfläche des Stempels wird dabei durch wenigstens eine Flanke definiert, die ausgehend von der äußeren flachen Kontaktfläche (äußerer Bereich) in einem Winkel α mit 0 > α ≥ 90 ° angeordnet ist bzw. sind. Eine Hinterschneidung, das bedeutet ein Flankenwinkel α von mehr als 90°, ist erfindungsgemäß nicht vorgesehen.
Je größer der Flankenwinkel gewählt wird, desto größer wird die konkave Aussparung und damit während des Pressens und Sinterns der Druckunterschied, der zwischen dem äußeren Bereich mit der flachen Kontaktfläche und dem inneren Bereich mit der konkaven Aussparung des Stempels auf das zu verdichtende Pulver einwirkt. Ein sehr großer Druckunterschied kann bei der Herstellung des Bauteils allerdings insbesondere an der Grenzfläche porös/dicht zu nicht erwünschten Spannungen im Bauteil führen, so dass vorzugsweise ein Flankenwinkel zwischen 15° und 75°, vorzugsweise zwischen 45° und 60° eingestellt werden sollte.

Im Allgemeinen führt der Einsatz eines Stempels mit einer geometrisch modifizierten Kontaktfläche zu einem Bauteil, welches wenigstens zwei Bereiche unterschiedlicher Porosität aufweist, wobei der äußere Bereich mit der geringeren Porosität durch eine klar definierte Grenzfläche dicht/porös von dem inneren Bereich mit einer höheren Porosität abgegrenzt ist.

Im Bereich der Flanken bildet sich in Abhängigkeit vom Flankenwinkel α während des Sinterns ein Druckgradient auf das zu sinternde Material aus, der in der Regel dazu führt, dass im inneren Bereich des erzeugten Bauteils die Porosität ebenfalls eine Gradierung aufweist. Vorzugsweise aber nicht zwingend weist der innere Bereich, d. h. die konkave Aussparung, neben der oder den Flanken einen weiteren Bereich auf, der parallel zur flachen, äußeren Kontaktfläche angeordnet ist und innere, flache Kontaktfläche genannt wird. (siehe dazu Figur 3).
In diesem inneren flachen Bereich wird während des Sinterns ein konstanter Druck auf das zu sinternde Material ausgeübt, so dass im inneren flachen Bereich des erzeugten Bauteils regelmäßig eine einheitliche Porosität vorliegt.
Mit dem erfindungsgemäßen Verfahren kann somit vorteilhaft in einem Herstellungsschritt ein Trägersubstrat hergestellt werden, welches einerseits einen äußeren, flachen, stärker verdichteten Bereich aufweist, und andererseits einen inneren, weniger verdichteten Bereich, wobei der innere Bereich vorzugsweise auch zumindest in einem Bereich flach ausgestaltet ist. Beispiele für geeignete Geometrien der erfindungsgemäß hergestellten Bauteile sind schematisch in der Figur 3 dargestellt.

Ein solches Trägersubstrat mit unterschiedlichen Porositäten und insbesondere mit einem inneren flachen Bereich kann vorzugsweise als Träger für eine Membran eingesetzt werden, wobei insbesondere der flache, innere stark poröse Bereich für die Aufbringung der Membranschicht vorgesehen ist und der äußere, flache verdichtete Bereich für die Anbindung und Abdichtung an ein Gehäuse, z. B. eine Membranreaktor, vorgesehen ist. Damit kann durch den verdichteten äußeren Bereich des erfindungsgemäß hergestellten Bauteils, ggfs. mit einer aufgebrachten Membranschicht, eine gasdichte Einbindung einer solchen geträgerten Membran in einem Membranreaktor deutlich vereinfacht werden.

Erfindungsgemäß weist der äußere, flache verdichtete Bereich des Trägersubstrates eine Porosität von weniger als 5 Vol.-%, insbesondere von weniger als 2 Vol.-%, und vorzugsweise von weniger als 1 Vol.-% auf. Demgegenüber sollte das Trägersubstrat im inneren, stärker porösen Bereich und insbesondere im inneren, flach ausgestalteten Bereich eine Porosität zwischen 10 und 60 Vol.-%, insbesondere zwischen 20 und 55 Vol.-% und vorzugsweise zwischen 30 und 50 Vol.-% aufweisen. Diese Angaben beziehen sich ausdrücklich nicht auf die jeweiligen Übergangsbereiche porös - dicht, die insofern die eine gradierte Porosität aufweisen, die entsprechend zwischen der des äußeren, flachen verdichteten Bereichs und des inneren, stärker porösen Bereichs liegt.
Die Ausgestaltung des Stempels, insbesondere die Geometrie der Kontaktfläche, die hauptsächlich die Abmessung des Bauteils bestimmt, und die Geometrie des inneren, konkav ausgebildeten Bereichs, der bei dem Bauteil den Bereich mit einer geringeren Porosität festlegt, können je nach Anforderung von einem Fachmann entsprechend ausgewählt werden.
In einer Ausgestaltung der Erfindung weist der Stempel beispielsweise eine kreisförmige Kontaktfläche auf. Daneben sind aber auch Stempel mit einer anderen Geometrie der Konktaktfläche denkbar. Dazu gehören beispielsweise auch eine dreieckige, quadratische, rechteckige oder auch andere polyederförmige Kontaktflächen.
In einer weiteren Ausgestaltung der Erfindung wird ein Stempel eingesetzt, dessen konkaver innerer Bereich kreisförmig ausgestaltet ist. Eine solche Aussparung kann beispielsweise durch eine einzige, konzentrisch verlaufende Flanke mit einem Winkel α von mehr als 0° und weniger als 90° gebildet werden.
Die gewählte Geometrie der Kontaktfläche und des inneren konkav ausgestalteten Bereichs des Stempels können, müssen aber nicht zwingend korrespondieren. So sind Stempel mit einer kreisförmigen Kontaktfläche und einem kreisförmigen inneren konkav ausgestalteten Bereich denkbar, aber auch Stempel mit einer quadratischen Kontaktfläche und einem kreisförmigen inneren konkav ausgestalteten Bereich, oder auch ein Stempel mit einer kreisförmigen Kontaktfläche und einem oktaedrischen inneren konkav ausgestalteten Bereich.

Vorteilhaft aber nicht zwingend ist der innere Bereich mit der konkaven Aussparung mittig innerhalb der Kontaktfläche des Stempels angeordnet.
Das Verhältnis von äußerem Bereich und innerem Bereich kann im Prinzip je nach Anwendungsfall frei gewählt werden. Allerdings sollte der äußere Bereich für eine sinnvolle Anwendung 2 mm in der Regel nicht unterschreiten, da sonst ggfs. Probleme mit der Stabilität der Stempel auftreten könnten.
Es ist prinzipiell auch möglich, in einer Ebene eines Bauteils mehrere poröse Bereiche - ähnlich einem Lochblech mit einer porösen Füllung der Löcher - zu generieren. Ein dafür geeigneter Stempel würde insofern mehrere innere Bereiche mit jeweils einer konkaven Aussparung aufweisen. So eine Struktur könnte für eine Anwendung als Membranmodul trotz verringerter Durchflussrate aus Gründen verbesserter Stabilität von Interesse sein.
In einer weiteren vorteilhaften Ausgestaltung weist der Stempel eine innere flache Kontaktfläche auf, die wenigstens 50 %, vorzugsweise mehr als 70 % und besonders vorteilhaft mehr als 90 % der Fläche des inneren Bereichs ausmacht. Eine solche Ausführungsform ist zu wählen, wenn ein Bauteil als Träger für eine Membran hergestellt werden soll, bei dem sehr hohe Durchflüsse erwünscht sind, und die Stabilität insofern nur zweitrangig ist.

Je nach Verfahren können in einer weiteren vorteilhaften Ausgestaltung des Verfahrens nicht nur ein sondern zwei erfindungsgemäß modifizierte Stempel eingesetzt werden, die von zwei Seiten aus das zu verdichtende Pulver in der Matrize mit einer Kraft beaufschlagen.
Damit ist es vorzugsweise möglich, in einem einzigen Verfahrensschritt ein Bauteil mit einer noch komplexeren Oberflächengeometrie herzustellen, welches weiterhin unterschiedliche Bereiche mit unterschiedlichen Porositäten aufweist.

Die über das erfindungsgemäße Verfahren herstellbaren Trägersubstrate weisen in der Regel eine prismatische oder zylinderförmige Form auf, wobei die Grundfläche und die Deckfläche der Trägersubstrate in der Regel parallel zueinander ausgerichtet sind, die Grundflächen und Deckflächen üblicherweise eine deckungsgleiche Geometrie aufweisen und die Seitenfläche, bzw. Seitenflächen senkrecht auf der Grundfläche stehen. Überdies weisen diese Trägersubstrate auf der Grund- bzw. Deckfläche oder auch auf beiden Flächen einen inneren Bereich mit einer konvexen Auswölbung auf (als Negativform zu den jeweils eingesetzten Stempeln), die vorzugsweise ebenfalls einen flachen, parallel zur Grund- bzw. Deckfläche ausgerichteten Bereich aufweisen. Die Geometrie der Grund- bzw. Deckfläche entspricht dabei der Kontaktfläche der eingesetzten Stempel und kann insbesondere eine kreisförmige, ovale, quadratische, rechteckige oder sonstige vieleckige Form annehmen.

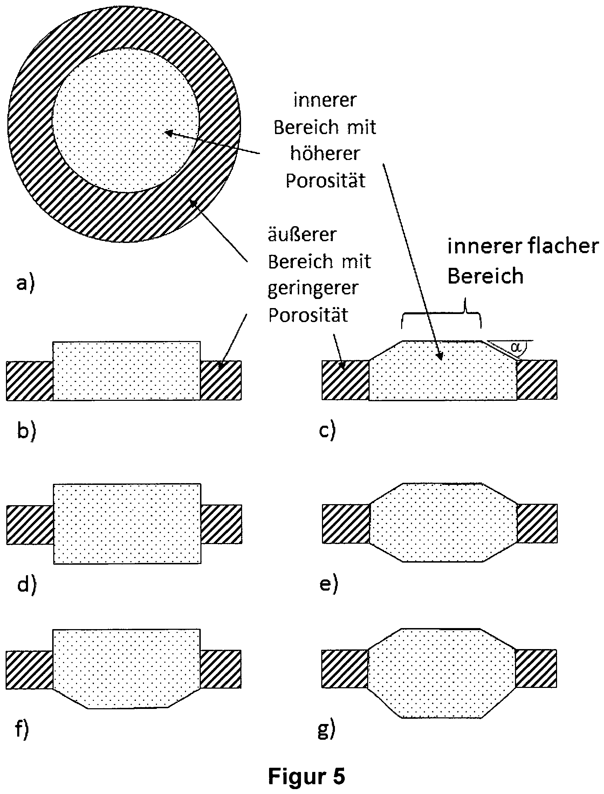

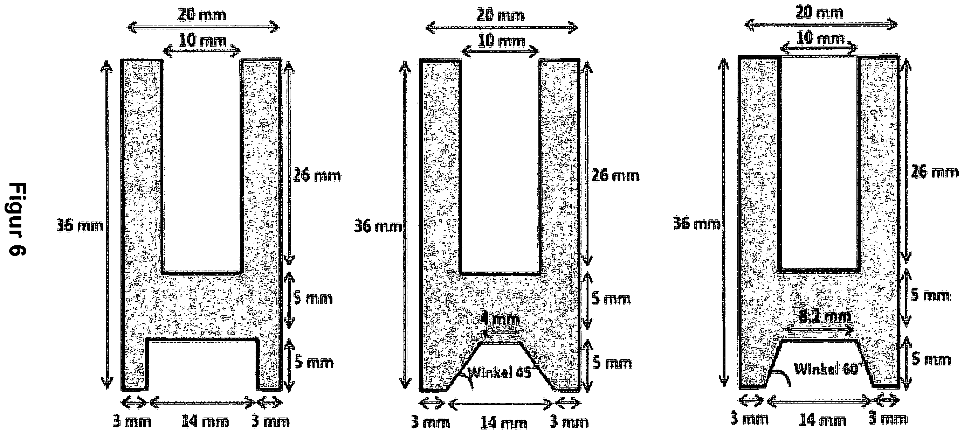

Für den Einsatz der Trägersubstrate für eine spätere Membranbeschichtung haben sich Bauteile mit einer quadratischen oder rechteckigen Form als besonders vorteilhaft herausgestellt.
Je nach geometrischer Anforderung für die optimale Integration in den Membranreaktor können bei Einsatz von zwei konturierten Stempeln diese entweder die gleiche Kontur aufweisen (siehe entsprechenden Bauteilquerschnitt in Figur 5 d) und 5 e)) oder auch eine unterschiedliche Kontur (siehe entsprechenden Bauteilquerschnitt in Figur 5 f) und 5 g)).
Dabei können bei zwei eingesetzten Stempeln unabhängig voneinander sowohl die inneren Bereiche unterschiedlich groß gewählt werden, für die inneren Bereiche unterschiedliche Geometrien gewählt werden, für die jeweiligen inneren Bereiche unterschiedlichen Flankenwinkel α gewählt werden und auch unterschiedliche große innere flache Bereiche vorgesehen werden.
Eine Verdichtung der Porenstruktur hin zum Übergang porös - dicht aufgrund des Winkels in den Stempeln sollte für die spätere Beschichtung kein Problem sein. Im dichten Randbereich kann eine optionale Erhöhung der Rauigkeit z. B. durch Sandstrahlen einen Vorteil für die Schichthaftung bringen.
Mit dem erfindungsgemäßen Verfahren lassen sich insofern durch Auswahl geeigneter Stempel vorteilhafterweise eine Vielzahl von Variationsmöglichkeiten für die Form und Geometrie und damit für die generierten Porositäten innerhalb der herzustellenden Trägersubstrate einstellen.

Für die Anwendung als Trägerstruktur für Protonen oder Sauerstoffionen leitende Membranen sind insbesondere die Querschnitte in Figur 5 a) und 5 b) bevorzugt, da in diesem Fall die Anordnung der Membranbeschichtung auf der planaren Stirnfläche (ohne Spalte und konkave Vertiefungen) die besten Voraussetzung für eine fehlerfreie Beschichtung der Membran bietet. Weiterhin ist durch eine geometrische Ausdehnung der Membranbeschichtung über die porös/dichte Grenzfläche hinaus bis auf den verdichteten Randbereich des Substrats die für den Betrieb notwendige Abdichtung der Membran sicher gewährleistet.
Die Temperaturen, die für die vorbeschriebenen Verfahren benötigt werden, können sowohl durch eine äußere Wärmequelle als auch intern über einen einstellbaren Stromfluss zur Verfügung gestellt werden. Dabei treten in der Regel unterschiedliche Aufheiz- und Abkühlraten auf, die sich unterschiedlich auf den Druckauf- bzw. abbau und auf den Ablauf der Sinterprozesse auswirken.

Erfindungsgemäß wird die für das Feldunterstützte Sintern/Spark-Plasma Sintern bekannte schnelle Aufheiz- und Abkühlrate mit einem Druckaufbau auf das zu sinternde Material kombiniert, bei dem wenigstens ein besonders angepasster Stempel verwendet wird, so dass sich schon während des Sinterns eines Substrats verschiedene Bereiche mit unterschiedlichen Porositäten ausbilden. Insbesondere ermöglicht das erfindungsgemäße Verfahren mit Hilfe eines FAST/SPS-Verfahrens eine höchst effektive - da schnelle - Herstellung poröser Substrate mit verdichteten Kanten in einem oder zwei Prozessschritten.
Die typischerweise bislang beim Heißpressen oder beim Spark-Plasma Sintern verwendeten beweglichen Stempel weisen gegenüber dem zu verdichtenden Material eine kreisförmige, plane, flache Kontaktfläche mit einem Radius r auf, mit der das Pulver von in der Regel zwei Seiten innerhalb einer Form zusammengedrückt und verdichtet werden. Betrachtet man die Ebene zwischen dem zu verdichtenden Material und der Stempeloberfläche als Ausgangsfläche, so weist die flache Stempelkontaktfläche ihr gegenüber einen Winkel von 0° auf. Eine entsprechende graphische Darstellung ist in Figur 3) wiedergegeben.
Der erfindungsgemäße Stempel selbst kann vorteilhaft auch mehrteilig ausgestaltet sein. In einer vorteilhaften Ausführungsform der Erfindung weist der Stempel beispielsweise senkrecht zur Pressrichtung einen ersten Teil (Stempelform) auf, der für den Kontakt mit dem zu verdichtenden Material vorgesehen ist, und dessen Oberfläche erfindungsgemäß geometrisch besonders angepasst ist, und eine zweiten Teil (Verbindungsteil), welcher den Kontakt zwischen der Stempelform und der übrigen Pressvorrichtung bzw. ggfs. einer Elektrode sicherstellt. Diese Ausgestaltung ist beispielsweise in der Figur 3 angedeutet.

Eine mehrteilige Ausführung des Stempels bietet hierbei den Vorteil, dass je nach Anwendung schnell unterschiedliche Stempelformen eingesetzt werden können, ohne dass dazu der gesamte Stempel, bzw. das Verbindungsteil mit ausgetauscht werden müssen.

Das Verbindungsteil und gegebenenfalls auch noch die Stempelform können massiv ausgestaltet sein, oder aber optional auch noch Hohlräume zur Aufnahme einer oder mehrerer Messsonden bzw. zur Generierung des Messsignals (Pyrometer) aufweisen, wie schematisch in der Figur 2 dargestellt, bei den erfindungsgemäßen Ausführungen gemäß der Figuren 3 und 4 aber nicht dargestellt. Eine solche Bohrung bzw. Aussparung bringt den Vorteil, dass die für die kontrollierte Durchführung des Sinterprozesses notwendige Temperaturmessung so nahe an der Probe wie möglich durchgeführt werden kann. Für die Temperaturmessung wird entweder ein Thermoelement (Messung ab Raumtemperatur) oder ein Pyrometer (Messung ab Temperaturen oberhalb 500°C) verwendet.

Ein weitere vorteilhafte Ausführung eines mehrteiligen Stempels umfasst eine aus der klassischen Pressentechnik bekannte Teilung der Stempel in Längsrichtung, d. h. parallel zur Pressrichtung, so dass bei geeigneter Auslegung der FAST/SPS Anlagentechnik eine unabhängige Bewegung des äußeren. Stempelbereichs (Stempelform Hohlzylinder) und des inneren Stempelbereichs (Zylinder mit flacher Stirnfläche oder mit Vertiefung und Flankenwinkeln wie in Figur 4 gezeigt) möglich wird. Dies Ausführung des Stempels ermöglicht die vorteilhafte Einstellung unterschiedlicher Drücke im äußeren und inneren Bereich des Stempels, wodurch sich weitere Freiheitsgrade bei der Erzeugung der in Figur 5 beispielshaft gezeigten Substratgeometrien eröffnen.

Durch die Auswahl von Stempel bzw. Stempelformen mit jeweils geeigneter Stempelgeometrie kann der poröse Bereich eines Trägersubstrates, auf den später auf einer Seite eine Membran aufgebracht werden soll, vollkommen flach ausgebildet werden, ohne dass nachteilige Hohlräume entstehen. Dies vereinfacht die nachträgliche Beschichtung mit einem Membranmaterial deutlich und führt in Folge zu der gewünschten Gasdichtigkeit der Membran in Bezug auf das poröse Trägersubstrat.

Dabei ist zu erwähnen, dass eine Beschichtung mit einem Membranmaterial nicht auf den porösen inneren Bereich beschränkt ist, sondern in einer vorteilhaften Ausführung bis in den dichten Bereich erfolgt. Auf diese Weise ist die Abdichtung der Membran und die Trennung der Gasräume im Membranreaktor sicher gewährleistet.

Bei dem erfindungsgemäßen Verfahren wird das Ausgangspulver zunächst in eine Matrize eingebracht, die über ein oder zwei Stempel verschlossen wird. Durch Anlegen einer voreingestellten Kraft wird über den oder die Stempel ein Druck P₁ auf das zu verdichtende Material ausgeübt. Gleichzeitig wird über eine externe Heizquelle oder über einen einstellbaren Stromfluss das zu verdichtende Material bis zu einer maximale Temperatur T₁ aufgeheizt.

Durch die erfindungsgemäß angepasste Oberflächengeometrie des oder der Stempel wird das zu verdichtende Pulver gleichzeitig an verschiedenen Stellen unterschiedlichen Drücken ausgesetzt. Die äußere, flache Kontaktfläche des Stempels wirkt dabei regelmäßig mit einem höheren Druck auf das Pulver, als der konkav ausgestaltete innere Bereich der Kontaktfläche, wodurch insbesondere ein innerer Bereich (Index i) mit einer größeren und ein äußerer Bereich (Index a) mit einer geringeren Porosität ausgebildet werden.

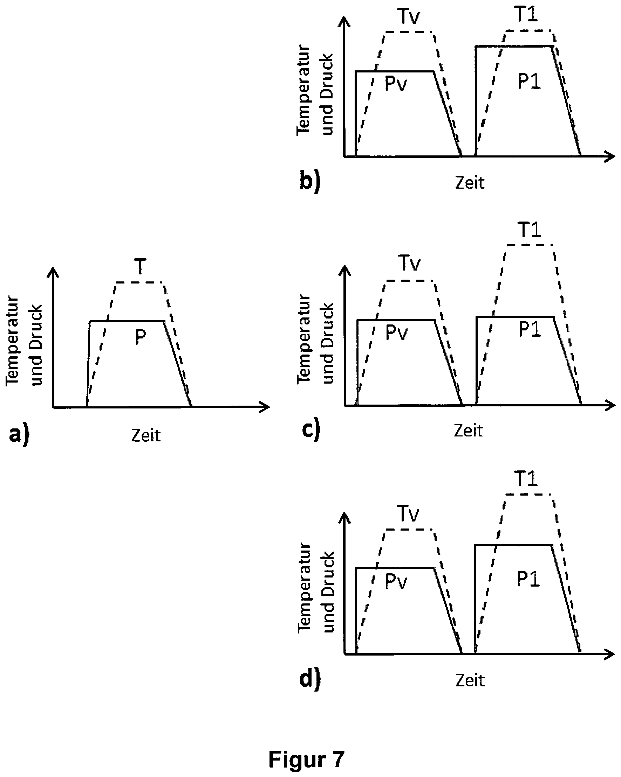

Das Verfahren kann vorteilhaft in einem einzigen Verfahrensschritt Schritt durchgeführt werden, bei dem eine maximale Temperatur T₁ und eine Kraft vorgegeben werden, die dann an der Stelle des zu verdichtenden Pulvers in Folge der Konturierung des Stempels zu unterschiedlichen Drücken P₁ führt, mit der das zu verdichtende Pulver verdichtet und gesintert wird. Figur 5a zeigt den das entsprechende Temperatur-Druck-Zeit Diagramm. Die Auf- und Abkühlzeiten variieren dabei regelmäßig mit der verwendeten Quelle für die der Heizleistung. Bei Einsatz des FAST/SPS-Verfahrens sind diese in der Regel extrem kurz. Eine schematische Darstellung der typischen Druck- und Temperaturverläufe, wie sie bei einem einstufigen Verfahren typischerweise eingestellt werden, ist in Figur 7 a) zu sehen.

In einer besonderen Ausgestaltung des Verfahrens kann auch zunächst eine Vorsinterung (Index v) des Ausgangspulvers bei einem Druck Pᵥ und einer maximalen Temperatur Tᵥ mit einem oder zwei üblichen Stempeln erfolgen. Übliche Stempel sind dabei flache Stempel, ohne eine erfindungsgemäß angepasste geometrische Ausgestaltung der Kontaktfläche.

Im Fall einer Vorsinterung erfolgt die eigentliche Sinterung, Formgebung und Verdichtung des Randbereichs erfindungsgemäß durch einen zweiten Sinterschritt, vorzugsweise aber nicht zwingend in derselben Vorrichtung, wobei wenigstens ein erfindungsgemäßer Stempel eingesetzt wird.

Folgende prinzipiellen Kombinationen von Temperatur und Druck können vorzugsweise für die Sinterparameter für den zweiten Verfahrensschritt eingestellt werden:
1) T₁ = Tᵥ und P₁ > Pᵥ;
2) T₁ > Tᵥ und P₁ = Pᵥ;
3) T₁ > Tᵥ und P₁ > Pᵥ;

Die Figuren 7 b) bis 7 d) zeigen die entsprechenden Temperatur-Druck-Zeit-Diagramme der oben beschriebenen Varianten 1 - 3.

Die Erfindung betrifft ein neues Verfahren zur Herstellung eines metallischen oder keramischen Substrats für beispielsweise eine Protonen leitende Membran oder für eine Sauerstoffionen leitende Brennstoff- bzw. Elektrolysezelle, welches Bereiche mit unterschiedlichen Porositäten unterschiedliche bei dem bereits während des Herstellungsverfahrens Bereich mit unterschiedlichen Porositäten im Bauteil erzeugt werden können.

Ein mit dem erfindungsgemäßen Verfahren hergestelltes metallisches und/oder keramisches Substrat weist wenigstens einen inneren porösen Bereich auf, der regelmäßig keine teilweise geschlossenen Poren aufweist und auch keine Wärmeeinflusszonen zeigt, die sich in einer unterschiedlichen Zusammensetzung oder Mikrostruktur der Legierungselemente äußern würde.

Daher zeigt ein solches mit dem erfindungsgemäßen Verfahren hergestelltes, metallisches oder keramisches Substrat auch vorteilhaft keine verringerte Stabilität oder einen verringerten Korrosionswiderstand im Vergleich zu einem über herkömmliche Verbindungstechniken hergestellten Substrats.

Zudem wurde festgestellt, dass ein mit dem erfindungsgemäßen Verfahren hergestelltes Substrat bei geeigneter Prozessführung vorzugsweise weder Eigenspannungen noch Verzerrungen im Bereich der Grenzfläche dicht/porös aufweist.

Ein solches Trägersubstrat kann insbesondere als Träger für eine Membran in einer Gastrennvorrichtung verwendet werden.

### Spezieller Beschreibungsteil

Der Aufbau einer Anlage für das Feldunterstützte Sintern/Spark-Plasma Sintern ist in Figur 1 dargestellt und aus [1] entnommen.

Das in einer Spark-Plasma Sinter-Anlage zu verdichtende pulverförmige metallische oder auch keramische Material wird in eine.graphitische Form (Matrize) gefüllt. Von außen wird Druck auf die beiden Graphitstempel ausgeübt. Durch Anlegen eines Gleichstroms bzw. eines gepulsten Stroms wird die Matrize über die Widerstandsheizung (Joule'sche Erwärmung) erhitzt. Sofern das pulverförmige Material selbst elektrisch leitfähig ist, erfolgt die Erwärmung aufgrund des Ohm'schen Widerstandes vorteilhaft auch direkt innerhalb des Materials. Bei Einsatz eines Pulvers ohne eigene elektrische Leitfähigkeit, wird dieses in der Regel in einer elektrisch leitfähigen Matrix eingeschlossen und die Erwärmung erfolgt indirekt über das Matrixmaterial.

Das Feldunterstützte Sintern/Spark-Plasma Sintern Verfahren ist bislang erfolgreich für die Synthese von dichten metallischen oder keramischen Materialien eingesetzt worden. Das Verfahren bietet auch Vorteile bei der Verdichtung von Materialien, die regelmäßig Schwierigkeiten beim Sintern machen.

In einer vorteilhaften Ausgestaltung des Verfahrens wird beispielsweise in einer hohlzylindrischen Form ein unterer Stempel mit einer flachen Oberfläche mit Radius = r eingesetzt, während der obere Stempel mit Radius = r eine Oberfläche mit einem abgesetzten Ring mit einen inneren Radius rᵢ aufweist. Beim Pressen wird insofern auf den inneren Bereich des zu sinternden Materials ein geringerer Druck ausgeübt, als auf den äußeren Bereich. Das Material, welches unterhalb des äußeren ringförmigen Bereiches liegt, wird stärker zusammengepresst und somit weiter verdichtet, als das Material im inneren Bereich. Dadurch kann vorteilhaft ein kreisförmiges metallisches oder keramisches Substrat mit einem ebenfalls kreisförmigen porösen inneren Bereich und einem ringförmigen, dichten äußeren Bereich hergestellt werden, bei dem die Grenze zwischen dem porösen und der verdichteten Bereich geometrisch sehr gut definiert ist.

Neben einer Ausführung der Stempel in Kreisgeometrie ist es auch möglich quadratische oder rechteckige Stempel zu verwenden und in diese eine entsprechend der für die kreisförmige Geometrie beschriebene Konturierung einzubringen. Entsprechend muss auch die Geometrie der Matrize angepasst werden. Die mit dieser Vorrichtung hergestellten quadratischen oder rechteckigen, in der Porosität gradierten Substrate bieten Vorteile für die Fertigung von Membranreaktoren hinsichtlich der Raumausnutzung und der Strömungsverteilung.

### Ausführungsbeispiel 1:

In der Figur 4 sind einige Ausführungsformen erfindungsgemäßer Stempel dargestellt, wie sie die für eine SPS-Anlage eingesetzt wurden. Neben einem modifizierten Stempel mit einer Flanke mit α = 90° werden bevorzugt Stempel mit einer weniger steilen Flanke, also beispielsweise mit α = 60 ° oder α = 45 ° eingesetzt. In allen Fällen ist eine innere, flache Kontaktfläche vorgesehen, die die Herstellung eines Trägersubstrates mit einem porösen, flachen Bereich ermöglicht, auf den dann z. B. vorzugsweise eine Membran aufgebracht werden kann.

### Ausführungsbeispiel 2:

In einer Spark-Plasma Sinter-Anlage (FAST/SPS) wurde eine NiCoCrAlY-Legierung (Oerlikon Metco, Amdry 386, Ni22Co17Cr12Al0,5Hf0,5Y0,4Si) als Pulver in eine graphitische Form (Tiegel) mit einem Durchmesser vom 20 mm eingefüllt. Die Pulverteilchen weisen eine kugelige Geometrie auf und wurden mittels Gaszerstäubung hergestellt. Die Pulverteilchen wiesen einen mittleren Durchmesser von 20 µm auf.

Pellets mit 20 mm Durchmesser wurden sowohl in einem als auch in zwei Verfahrensschritten gesintert, wobei jeweils ein flacher (üblicher) Stempel und ein Stempel mit einer erfindungsgemäß angepassten Kontaktfläche eingesetzt wurden. Die Proben wurden mit einer Aufheizrate von 100 K/min aufgeheizt und bei der maximalen Temperatur für ca. 15 sec gehalten, bevor sie wieder abgekühlt wurden.

Die Proben, die in zwei Verfahrensschritten gesintert wurden, wurden im ersten Schritt bis zu einer maximalen Temperatur von Tᵥ = 875 °C bei einem Druck von Pᵥ = 20 MPa und im zweiten Schritt auf Temperaturen von T₁ = 1000 °C aufgeheizt.

Die Proben, die in einem Verfahrensschritt gesintert wurden, wurden bis zu einer maximalen Temperatur von T₁ = 975 °C aufgeheizt. Durch den modifizierten Stempel wurden im äußeren ringförmigen Bereich der Probe Drücke P₁ von um die 50 MPa erreicht.
Die Porositäten des inneren und des äußeren Bereichs der Proben variieren mit der Anzahl der Sinterschritte. In beiden Fällen zeigt sich bei den Proben jedoch jeweils ein innerer poröser Bereich sowie ein äußerer, ringförmiger verdichtete Bereich mit geringerer Porosität, wie nachfolgend in der Tabelle 1 angegeben.
Tabelle 1: Porositäten in unterschiedlichen Bereichen einer Probe (jeweils mittels FAST/ SPS-Verfahren erfindungsgemäß hergestellt)

| Sinterschritte | Porosität im inneren Bereich | Porosität im äußeren Bereich |
|---|---|---|
| ein Sinterschritt mit | 20 Vol.-% | 8 Vol.-% |
| T₁ = 975 °C | | |
| zwei Sinterschritte mit | 10 Vol.-% | 0,4 Vol.-% |
| Tᵥ = 875 °C und T₁ = 1000 °C | | |

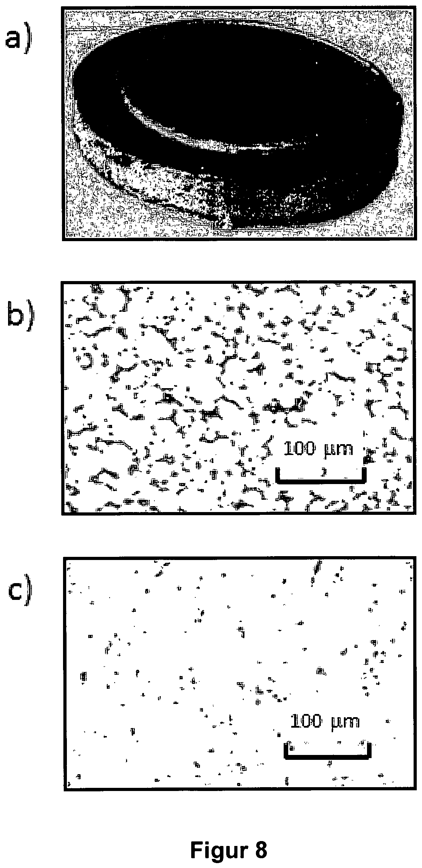

In der Figur 8 sind die Ergebnisse eines zweistufigen Sinterverfahrens und lasermikroskopische Aufnahmen des inneren und des äußeren Bereiches dargestellt.

In Figur 8 a) ist der ringförmige, äußere stärker verdichtete Bereich und die Grenzlinie zwischen dem stärker verdichten äußeren Ring und dem weniger stark verdichten inneren Bereich gut erkennbar. In den Figuren 8 b) und 8 c) bedeuten: schwarze Bereiche = Poren und grauen Bereiche = metallische Matrix.

In dieser Anmeldung zitierte Literatur:
[1] Guillon, O., J. Gonzalez-Julian, B. Dargatz, T. Kessel, G. Schierning, J. Rathel, and M. Herrmann, "Field-Assisted Sintering Technology/Spark Plasma Sintering: Mechanisms, Materials, and Technology Developments", Advanced Engineering Materials, 2014, 16(7): S. 830 - 849.
[2] Aliyu, I., N. Saheb, S. Hassan, and N. Al-Aqeeli, "Microstructure and Properties of Spark Plasma Sintered Aluminum Containing 1 wt. % SiC Nanoparticles", Metals, 2015, 5: S. 70 - 83.
[3] Laptev, A., M. Bram, M. Zivcec, S. Baumann, M. Jarligo, D. Sebold, E. Pfaff, and C. Broeckmann, "Manufacturing of Metal Supported BSCF Membranes by Spark Plasma Sintering", Euro PM2013 Congress and Exhibition, At Göteborg, Sweden, S. 3.
[4] Selcuk, C., S. Bond, and P. Woolin, Powder Metallurgy, 2010. 53(1): p. 7-11.

## Patentansprüche

1. Verfahren zur Herstellung eines metallischen oder keramischen Trägersubstrates mit Bereichen mit unterschiedlichen Porositäten,
- bei dem Pulver oder ein vorgesintertes Bauteil einem druckunterstützten Verdichtungs- und Sinterschritt unterzogen werden,
- wobei für den Verdichtungsschritt wenigstens ein Stempel mit einer für den Kontakt mit dem Pulver oder dem vorgesinterten Bauteil vorgesehene Kontaktfläche eingesetzt wird, die einen äußeren, flachen Bereich mit einem Winkel von α = 0° und einen inneren Bereich mit einer konkaven Aussparung aufweist, die ausgehend von der äußeren flachen Kontaktfläche wenigstens eine Flanke in einem Winkel 0 < α ≤ 90° aufweist,
***dadurch gekennzeichnet,***
- **dass** der Sinterschritt durch ein elektrisches Feld unterstützt wird und
- **dass** nach dem Sinterschritt eine Membrane mit einem äußeren, flachen verdichteten Bereich mit einer Porosität von weniger als 5 Vol.-% und einem inneren porösen Bereich mit einer Porosität zwischen 10 und 60 Vol.-% erhalten wird, wobei für die Ermittlung der Porosität die Methode der Bildanalytik angewendet werden kann, und wobei das Trägersubstrat auf wenigstens einer Seite einen definierten Übergang zwischen dem äußeren und dem inneren Bereich aufweist.

2. Verfahren nach Anspruch 1,
bei dem wenigstens ein Stempel mit einer kreisförmigen, ovalen, quadratischen, rechteckigen oder vieleckigen Kontaktfläche eingesetzt wird.

3. Verfahren nach Anspruch 1 oder 2,
bei dem wenigstens ein Stempel mit wenigstens einem kreisförmigen, ovalen, quadratischen, rechteckigen oder vieleckigen inneren Bereich mit einer konkaven Aussparung eingesetzt wird.

4. Verfahren nach vorhergehendem Anspruch,
bei dem wenigstens ein Stempel eingesetzt wird, bei dem wenigstens ein innerer Bereich mit einer konkaven Aussparung wenigstens eine Flanke mit einem Winkel α zwischen 15° und 75°, und vorzugsweise zwischen 45° und 60° aufweist.

5. Verfahren nach einem der Ansprüche 1 bis 4,
bei dem wenigstens ein Stempel mit einem mittig angeordneten kreisförmigen inneren Bereich mit einer konkaven Aussparung mit einer Flanke mit einem konstanten Winkel α eingesetzt wird.

6. Verfahren nach einem der Ansprüche 1 bis 5,
bei dem wenigstens ein Stempel eingesetzt wird, bei dem wenigstens ein innerer Bereich mit einer konkaven Aussparung in Teilbereichen einen inneren flachen, insbesondere parallel zur Kontaktfläche des äußeren flachen Bereichs ausgerichteten, Bereich aufweist.

7. Verfahren nach einem der Ansprüche 1 bis 6,
bei dem zwei Stempel mit einer Kontaktfläche eingesetzt werden,
- die jeweils einen äußeren, flachen Bereich mit einem Winkel von α = 0° und jeweils
- einen inneren Bereich mit einer konkaven Aussparung aufweisen, die ausgehend von der äußeren flachen Kontaktfläche wenigstens eine Flanke in einem Winkel 0 < α ≤ 90° aufweisen.

8. Verfahren nach einem der Ansprüche 1 bis 7,
bei dem ein metallisches oder keramisches Pulver eingesetzt wird.

9. Verfahren nach Anspruch 1,
bei dem wenigstens ein Stempel mit mehreren inneren Bereichen mit jeweils einer konkaven Aussparung eingesetzt wird.

10. Metallisches oder keramisches Trägersubstrat, welches eine prismatische oder zylindrische Form und unterschiedliche Porositäten aufweist,
***dadurch gekennzeichnet,***
- **dass** das Trägersubstrat einen äußeren, flachen Bereich mit einer höheren Dichte und einen inneren Bereich mit wenigstens einer konvexen Erhöhung und einer geringeren Dichte aufweist,
- wobei der äußere, flache verdichtete Bereich eine Porosität von weniger als 5 Vol.-% und der innere poröse Bereich eine Porosität zwischen 10 und 60 Vol.-% aufweist, wobei für die Ermittlung der Porosität die Methode der Bildanalytik angewendet wurde, und
- **dass** das Trägersubstrat auf wenigstens einer Seite einen definierten Übergang zwischen dem äußeren und dem inneren Bereich aufweist.

11. Trägersubstrat nach Anspruch 10, mit einem kreisförmigen inneren Bereich.

12. Trägersubstrat nach Anspruch 10, mit einer zylindrischen Form und wenigstens einem flachen äußeren Bereich in Form eines Ringes.

13. Trägersubstrat nach Anspruch 10, mit einer prismatischen Form.

14. Trägersubstrat nach Anspruch 11, bei dem der kreisförmige innere Bereich eine Flanke mit einem konstanten Winkel α aufweist.

15. Trägersubstrat nach Anspruch 11, bei dem der kreisförmige innere Bereich eine Flanke mit einem Winkel α zwischen mehr als 0° und 90° aufweist, insbesondere zwischen 15° und 75°, vorzugsweise zwischen 45° und 60°.

16. Trägersubstrat nach einem der Ansprüche 10 bis 15, welches auf zwei gegenüberliegenden Seiten einen äußeren, flachen Bereich sowie wenigstens einen inneren Bereich mit einer konvexen Erhöhung aufweist.

17. Trägersubstrat nach einem der Ansprüche 10 bis 16, bei dem wenigstens ein innerer Bereich mit einer konvexen Erhöhung einen flachen inneren Bereich aufweist.

18. Trägersubstrat nach einem der Ansprüche 10 bis 17, bei dem der äußere, flache verdichtete Bereich eine Porosität von weniger als 2 Vol.-% und vorzugsweise von weniger als 1 Vol.-% aufweist.

19. Trägersubstrat nach einem der Ansprüche 10 bis 18, bei dem der innere poröse Bereich eine Porosität zwischen 20 und 55 Vol.-% und vorzugsweise zwischen 30 und 50 Vol.-% aufweist.

## Claims

1. A process for preparing a metallic or ceramic carrier substrate with regions having different porosities,
- wherein powder or a pre-sintered component is subjected to a pressure-assisted compression and sintering step,
- wherein, for the compression step, at least one piston with a contact surface intended for contacting the powder or the pre-sintered component is used, which contact surface has an outer, flat region with an angle of α = 0° and an inner region with a concave recess, which has at least one flank at an angle 0 < α ≤ 90° starting from the outer flat contact surface,
***characterized in***
- **that** the sintering step is supported by an electrical field and
- **that**, after the sintering step, a diaphragm with an outer, flat compressed region having a porosity of less than 5 vol. % and an inner porous region having a porosity between 10 and 60 vol. % is obtained, wherein the method of image analysis can be used for the determination of the porosity, and wherein the carrier substrate, at least on one side, has a defined transition between the outer and the inner region.

2. The process according to claim 1,
wherein at least one piston with a circular, oval, quadratic, rectangular or polygonal contact surface is used.

3. The process according to claims 1 or 2,
wherein at least one piston with at least one circular, oval, quadratic, rectangular or polygonal inner region with a concave recess is used.

4. The process according to the preceding claim,
wherein at least one piston is used, wherein at least one inner region with a concave recess has at least one flank with an angle α between 15° and 75°, and preferably between 45° and 60°.

5. The process of any of claims 1 to 4,
wherein at least one piston with a centrally arranged circular inner region with a concave recess with a flank with a constant angle α is used.

6. The process of any of claims 1 to 5,
wherein at least one piston is used, wherein at least one inner region with a concave recess in sub-regions has an inner flat region which is aligned particularly in parallel with the contact surface of the outer flat region.

7. The process of any of claims 1 to 6,
wherein two pistons with a contact surface are used,
- which each have an outer, flat region with an angle of α = 0° and each have
- an inner region with a concave recess, having at least one flank at an angle 0 < α ≤ 90° starting from the outer flat contact surface.

8. The process of any of claims 1 to 7,
wherein a metallic or ceramic powder is used.

9. The process according to claim 1,
wherein at least one piston with several inner regions with respectively one concave recess is used.

10. A metallic or ceramic carrier substrate which has a prismatic or cylindrical shape and different porosities,
***characterized in***
- **that** the carrier substrate has an outer, flat region with a higher density and an inner region with at least one convex elevation and a lower density,
- wherein the outer, flat compressed region has a porosity of less than 5 vol. % and the inner porous region has a porosity between 10 and 60 vol. %, wherein the method of image analysis has been used for the determination of the porosity, and
- **that** the carrier substrate, at least on one side, has a defined transition between the outer and the inner region.

11. The carrier substrate according to claim 10,
having a circular inner region.

12. The carrier substrate according to claim 10,
having a cylindrical shape and at least one flat outer region in the form of a ring.

13. The carrier substrate according to claim 10,
having a prismatic shape.

14. The carrier substrate according to claim 11,
wherein the circular inner region has a flank with a constant angle α.

15. The carrier substrate according to claim 11,
wherein the circular inner region has a flank with an angle α between more than 0° and 90°, in particular between 15° and 75°, preferably between 45° and 60°.

16. The carrier substrate according to any of claims 10 to 15,
which, on two opposite sides, has an outer, flat region and at least one inner region with a convex elevation.

17. The carrier substrate according to any of claims 10 to 16,
wherein at least one inner region with a convex elevation has a flat inner region.

18. The carrier substrate according to any of claims 10 to 17,
wherein the outer, flat compressed region has a porosity of less than 2 vol. % and preferably of less than 1 vol. %.

19. The carrier substrate according to any of claims 10 to 18,
wherein the inner porous region has a porosity between 20 and 55 vol. % and preferably between 30 and 50 vol. %.

## Revendications

1. Procédé de fabrication d'un substrat porteur métallique ou céramique ayant des régions de porosité différentes,
dans lequel on soumet de la poudre ou une pièce préfrittée à un stade de densification et de frittage assisté par la pression,
- dans lequel, pour le stade de densification, on utilise au moins un poinçon ayant une surface de contact, qui est prévue pour le contact avec le poudre ou la pièce préfrittée et qui une région extérieure plane ayant un angle α de 0° et une région intérieure ayant un évidement concave, qui a, en partant de la surface de contact extérieure plane, au moins un flanc suivant un angle 0 < α ≤ 90°,
**caractérisé**
- **en ce que** l'on assiste le stade de frittage par un champ électrique et
- **en ce que**, après le stade de frittage, on obtient une membrane ayant une région extérieure plane, densifiée, d'une porosité de moins de 5% en volume et une région intérieure poreuse, d'une porosité comprise entre 10 et 60% en volume, dans lequel, pour la détermination de la porosité, on peut appliquer la méthode de l'analyse d'image et dans lequel le substrat porteur a, au moins d'un côté, une transition définie entre la région extérieure et la région intérieure.

2. Procédé suivant la revendication 1,
dans lequel on utilise au moins un poinçon ayant une surface de contact circulaire, ovale, carrée, rectangulaire ou polygonale.

3. Procédé suivant la revendication 1 ou 2,
dans lequel on utilise au moins un poinçon ayant une région intérieure circulaire, ovale, carrée, rectangulaire ou polygonale ayant un évidement concave.

4. Procédé suivant la revendication précédente,
dans lequel on utilise au moins un poinçon, sur lequel au moins une région intérieure ayant un évidement concave a au moins un flanc ayant un angle α compris entre 15° et 75°, et de préférence compris entre 15° et 60°.

5. Procédé suivant l'une des revendications 1 à 4,
dans lequel on utilise au moins un poinçon ayant une région intérieure circulaire au milieu avec un évidement concave ayant un flanc ayant un angle α constant.

6. Procédé suivant l'une des revendications 1 à 5,
dans lequel on utilise au moins un poinçon, dans lequel au moins une région intérieure ayant un évidement concave a, dans des régions partielles, une région intérieure plane, orientée notamment parallèlement à la surface de contact de la région extérieure plane.

7. Procédé suivant l'une des revendications 1 à 6,
dans lequel on utilise deux poinçons ayant une surface de contact,
- qui ont chacun une région extérieure plane ayant un angle α de 0° et chacun
- une région intérieure ayant un évidement concave, qui, en partant de la surface de contact extérieure plane, ont au moins un flanc ayant un angle 0 < α ≤ 90°.

8. Procédé suivant l'une des revendications 1 à 7,
dans lequel on utilise une poudre métallique ou céramique.

9. Procédé suivant la revendication 1,
dans lequel on utilise au moins un poinçon ayant plusieurs régions intérieures ayant chacune un évidement concave.

10. Substrat porteur métallique ou céramique, qui a une forme prismatique ou cylindrique et des porosités différentes, **caractérisé**
- **en ce que** le substrat porteur a une région extérieure plane ayant une masse volumique assez grande et une région intérieure ayant au moins une éminence convexe et une masse volumique plus petite,
- dans lequel la région extérieure plane, densifiée, a une porosité de moins de 5% en volume et la région intérieure poreuse a une porosité comprise entre 10 et 60% en volume, la méthode de l'analyse d'image ayant été appliquée pour la détermination de la porosité, et
- **en ce que** le substrat porteur a, au moins d'un côté, une transition définie entre la région extérieure et la région intérieure.

11. Substrat porteur suivant la revendication 10,
ayant une région intérieure circulaire.

12. Substrat porteur suivant la revendication 10,
ayant une forme cylindrique et au moins une région extérieure plane sous la forme d'un anneau.

13. Substrat porteur suivant la revendication 10,
ayant une forme prismatique.

14. Substrat porteur suivant la revendication 11,
dans lequel la région intérieure circulaire a un flanc ayant un angle α constant.

15. Substrat porteur suivant la revendication 11,
dans lequel la région intérieure circulaire a un flanc ayant un angle α compris entre 0° et 90°, notamment entre 15° et 75°, de préférence entre 45° et 60°.

16. Substrat porteur suivant l'une des revendications 10 à 15,
qui a, de deux côtés opposés, une région extérieure plane, ainsi qu'au moins une région intérieure ayant une éminence convexe.

17. Substrat porteur suivant l'une des revendications 10 à 16,
dans lequel au moins une région intérieure ayant une éminence convexe a une région intérieure plane.

18. Substrat porteur suivant l'une des revendications 10 à 17,
dans lequel la région extérieure plane, densifiée, a une porosité de moins de 2% en volume et, de préférence, de moins de 1% en volume.

19. Substrat porteur suivant l'une des revendications 10 à 18,
dans lequel la région intérieure poreuse a une porosité comprise entre 20 et 55% en volume et, de préférence, entre 30 et 50% en volume.
